# EUROPÄISCHE PATENTSCHRIFT

(11) **EP 1 137 273 B1**
(45) Veröffentlichungstag und Bekanntmachung des Hinweises auf die Patenterteilung: **02.01.2003**
(21) Anmeldenummer: 01100070.0
(22) Anmeldetag: 10.01.2001
(51) Int. Cl.: H04N 5/44, H04N 5/50

(54) **Verfahren zur Steuerung eines Fernsehempfängers und Fernsehempfänger zur Durchführung des Verfahrens**
Method for controlling a television receiver and television receiver for implementing the method
Procédé de commande d'un récepteur de télévision et récepteur de télévision pour la mise en oeuvre dudit procédé

(30) Priorität: 11.01.2000 DE 10000642
(43) Veröffentlichungstag der Anmeldung: 26.09.2001
(73) Patentinhaber: LOEWE OPTA GmbH, 96317 Kronach (DE)
(72) Erfinder: Grinberg, Anna, 86159 Augsburg (DE); Maryniok, Wolfgang, Dipl.-Ing., 96317 Kronach (DE)

(56) Entgegenhaltungen:
- EP-A- 0 366 001
- EP-A- 0 477 753
- WO-A-97/34414
- DE-A- 19 933 422
- US-A- 4 162 513
- US-A- 4 271 532
- US-A- 4 367 559

## Beschreibung

Die Erfindung betrifft ein Verfahren zur Steuerung eines Fernsehempfängers mit einem Tuner, der durch Eingabe von Abstimmkanälen oder Frequenzen mittels Bedienelementen auf bestimmte Abstimmkanäle abstimmbar ist oder durch Eingabe von den Abstimmkanälen zugeordneten Programmplatznummern, die mit Hilfe von Tasten einer Zehnertastatur oder Fortschalttasten einer Ortsbedienung am Fernsehgerät oder eines Fernbedienungsgebers aufrufbar sind, wobei die den Kanälen zugeordneten Abstimmgrößen dem Tuner bei Betätigung des Bedienelementes zugeführt werden und den Femsehempfänger auf den neuen Sender abstimmen, sowie einen Femsehempfänger mit einer Schaltungsanordnung zur Durchführung des Verfahrens.

Es ist üblich, im Falle des Empfangs von Werbesendebeiträgen während einer laufenden Fernsehsendung durch sogenanntes "Zappen" mittels besonderer Bedientasten (Fortschalttasten) auf- und abwärts verlaufend auf benachbarte Kanäle umzuschalten, deren Abstimmdaten in dem Hauptspeicher des Fernsehempfängers zur Abstimmung abgespeichert sind. Die einzelnen Kanäle können dabei auch durch Betätigung der Programmtasten direkt aufgerufen werden. Der Zuschauer will damit verhindern, dass er sich die eingeblendete Werbesendung ansehen muss. Die Werbebeiträge werden zu unbestimmten Zeiten und während unbestimmter Zeitdauer eingeblendet. Sie sind darüber hinaus als Block nicht markiert, so dass der Zuschauer gezwungen ist, stets wieder auf sein ursprüngliches Programm, dessen Fortsetzung er sehen will, zurückzuschalten, wodurch die Abstimmung auf den entsprechenden Kanal vorgenommen wird. Er muss sich also zumindest den Programmplatz merken, unter dem sein bevorzugtes Programm, das er weiterhin zu sehen beabsichtigt, abgespeichert ist. Nach 3 bis 4 Min. solchen ständigen Umschaltens kann er sich oft nicht mehr an die Nummer des Kanals bzw. an die Bedientaste auf der Zehnertastatur des Programmplatzes erinnern, auf dem dieser Sender abgespeichert ist.

Aus der älteren PCT-Anmeldung gemäß WO 01/06649 A1 ist ein Abstimmverfahren für einen Rundfunkempfänger, insbesondere einen Fernsehempfänger, bekannt, wobei dem Rundfunkempfänger mindestens zwei Empfangskanäle vorgegeben werden, die Empfangskanäle nacheinander verdrängend in einem Abstimmspeicher und kumulierend in einem Hauptspeicher gespeichert werden und aufgrund von Abrufbefehlen einer der im Hauptspeicher gespeicherten Empfangskanäle in den Abstimmspeicher geladen wird und der Rundfunkempfänger entsprechend dem jeweils im Abstimmspeicher gespeicherten Empfangskanal abgestimmt wird. Dieses Abstimmverfahren dient dazu, eine Möglichkeit zu schaffen, mittels der der Benutzer des Rundfunkempfängers auf einfache Weise auch das zwischenzeitlich selektierte Programm, z.B. beim Zappen während eines Werbeblocks auf andere Kanäle, wieder auffinden kann. Solange der Hauptspeicher beim Zappen nicht gefüllt ist, kann jeder zwischenzeitlich, z.B. während eines Werbeblockes, selektierte Empfangskanal kumulativ im Hauptspeicher gespeichert werden. Wenn der Hauptspeicher hingegen gefüllt ist, muss die Speicherung verdrängend erfolgen. In diesem Fall wird ein weiterer Empfangskanal, der dem Rundfunkempfänger vorgegeben und im Abstimmspeicher gespeichert wird, vorzugsweise nur bei Eintreten einer Speicherbedingung im Hauptspeicher gespeichert, um nicht laufend die im Hauptspeicher gespeicherten Empfangskanäle zu verdrängen. Diese Speicherbedingung kann z.B. der Ablauf einer Speicherzeit von z.B. 10 oder 20 s sein. Alternativ kann eine vom Benutzer ausdrücklich einzugebende Speicherbestätigung erfolgen.

Bei indirekter Kanaleingabe können nach Ablauf einer Zusatzzeit, die allerdings erheblich größer sein muss als die Speicherzeit, z.B. 5 oder 10 min, die im Hauptspeicher gespeicherten Empfangskanäle vertauscht werden. Durch das Vertauschen bleiben die anderen Kanaleingaben erhalten und können beim Zurückzappen wieder angesprochen werden, und zwar von Speicherplatz zu Speicherplatz bzw. von einem Kanal zum anderen, wobei jeweils der ausgewählte Kanal in den Abstimmspeicher übertragen wird.

Der Erfindung liegt ausgehend von der eingangs dargestellten Problematik die Aufgabe zugrunde, eine automatische Speicherung des Senders vorzunehmen, dessen Sendebeitrag der Zuschauer während des laufenden Sendebeitrages alternativ empfangen will. Der entsprechende Sender soll durch eine einfache Bedienfunktion zu jeder Zeit wiederaufrufbar bzw. ein in Folge ausgewählter Sendebeitrag soll wiederaufrufbar sein, den der Zuschauer beabsichtigt fortgesetzt zu empfangen und wahrzunehmen, obgleich er zwischenzeitlich bei Einblendung eines Werbebeitrages den Tuner auf andere Kanäle abgestimmt hat.

Gelöst wird die Aufgabe durch die In den nebengeordneten Ansprüchen 1 und 2 angegebenen Verfahren, die darin selbsterklärend angegeben sind, sowie durch die in den nebengeordneten Ansprüchen 5 und 7 angegebenen Schaltungen zur Realisierung der Verfahren.

Der Vorteil der Erfindung liegt darin, dass mit einem einfachen Zwischenspeicher im einen Fall die Aufgabe gelöst werden kann und im anderen Fall überhaupt kein Zwischenspeicher benötigt wird, sondern nur durch Markierung ausgewählter Kanäle beim Zappen wieder auf den ursprünglichen bevorzugt zu sehenden Kanal zurückgeschaltet werden kann. Die Markierung kann beispielsweise durch Zeigerfunktionen mittels eines Mikroprozessors gesteuert realisiert bzw. die markierten können durch Zeigerfunktionen aufgerufen werden. Solche Techniken sind dem Softwareentwickler hinlänglich bekannt

Vorteilhafte weitere Verfahrensschritte sind in den abhängigen Unteransprüchen 3 und 4 angegeben, vorteilhafte Ausgestaltungen des Fernsehempfängers gemäß Anspruch 5 in den Ansprüchen 6, 8 und 9 sowie gemäss Anspruch 7 in den Ansprüchen 8 und 9.

Gemäß einer Ausführung der Erfindung ist vorgesehen, dass durch Aneignung einer zusätzlichen virtuellen Nummer das Aufrufen eines bestimmten Kanals, der zuletzt über einen längeren Zeitabschnitt als vorbestimmt, z.B. 10 min, empfangen worden ist, automatisch erfolgt und dass bei Wahl dieser Nummer stets wieder auf den zugeordneten Sender abgestimmt werden kann. Z.B. kann die virtuelle Nummer 0 oder 00 betragen. Wird 00 oder 0 gedrückt, so erscheint automatisch das entsprechende Programm, das in der Zwischenzeit im Falle des Werbebeitrages verlassen wurde. Wird allerdings ein neuer Kanal über einen vorbestimmten Zeitabschnitt hinaus, z.B. 11 Min. lang, gesehen, so deutet dies darauf hin, dass der Zuschauer dieses neue Programm zu sehen wünscht, so dass dann entsprechend der Lehre der Erfindung die entsprechenden Abstimmdaten in dem Zwischenspeicher abgespeichert werden, um sie über die virtuelle Nummer aufrufen zu können. Die Abspeicherung kann aber auch im Hauptspeicher selbst vorgesehen sein.

Es wird ferner ein Fernsehempfänger vorgeschlagen, einschließlich des Empfängers der Femsehsignale, des Blocks zur Eingabe der Nummer des Kanals zum Empfangen (BENK) und des Blocks für virtuelle Nummern der Kanäle (BVN). Der Ausgang des BENK ist dabei mit dem Eingang des BVN und der Ausgang des BVN mit dem Eingang des Empfängers verbunden und weist zusätzlich den Block für Feststellung des Prioritätskanals (BPK) auf. Der erste Eingang des BPK ist mit einem Ausgang des Empfängers verbunden, der zweite Eingang des BPK mit dem Ausgang des Block-Timers und der Ausgang des BPK mit einem Eingang des Empfängers.

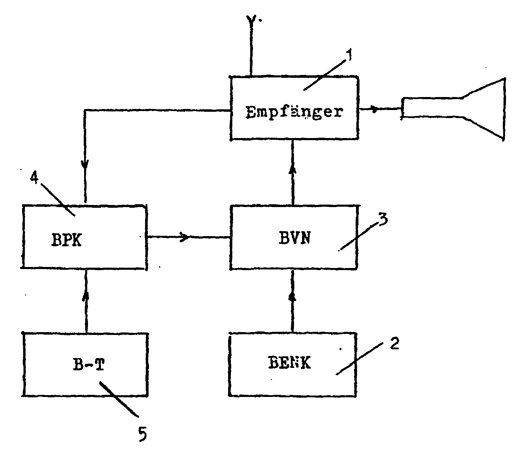

In der beiliegenden Zeichnung sind in Form eines Blockschaltbildes die erfindungswesentlichen Schaltungsanordnungen angegeben, mit denen es möglich ist, ein vorgeschlagenes Verfahren zu verwirklichen.

Der Fernsehempfänger weist einen Empfänger 1 (Tuner) für Fernsehsignale auf, ferner einen Block 2 zur Eingabe der Nummer des Kanals zum Empfangen (BENK), einen Block 3 für die virtuelle Nummer der Kanäle (BVN), einen Block 4 für die Feststellung eines Prioritätskanals (BPK). Der Ausgang des Blocks 2 ist mit dem ersten Eingang des Blocks 3 verbunden, der zweite Eingang des Blocks 3 mit dem Ausgang des Blocks 4. Der Ausgang des Blocks 3 ist mit dem Eingang des Empfängers 1 verbunden, der Ausgang des Empfängers 1 mit dem ersten Eingang des Blocks 4 und der zweite Eingang des Blocks 4 mit dem Ausgang des Block-Timers 5.

Der Fernsehempfänger arbeitet wie folgt:
Wenn der Block 2 dem Empfänger 1 durch den Block 3 einen entsprechenden Befehl gibt, beginnt der Empfänger 1 die Wiedergabe der Sendung, die auf dem entsprechenden Kanal empfangen wird. Gleichzeitig sendet der Empfänger 1 die Nummer des oben genannten Kanals dem Block 4 zu. Der Block 4 stellt durch Daten, die vom Block-Timer 5 kommen, fest, ob auf diesem Kanal schon länger als 10 Min. lang empfangen wird. Falls ja, sendet er das entsprechende Signal dem Block 3 zu und dieser eignet diesem Kanal zusätzlich die virtuelle Nummer 00 an. Falls diese Nummer 00 schon früher einem anderen Kanal angeeignet worden war, löscht der Block 3 gleichzeitig auch die frühere Aneignung. Jetzt kann man den ursprünglichen Kanal sowohl durch das Aufrufen seiner eigenen Nummer als auch durch das Aufrufen der Nummer 00 aufrufen. Wenn man nach dem Umschalten zwischen den Kanälen während einer Werbeunterbrechung zu dem ursprünglichen Kanal zurückkehren möchte, braucht man sich nicht mehr an die Nummer des ursprünglichen Kanals zu erinnern und wählt einfach die Nummer 00. Die technische Verwirklichung dieser Erfindung in modernen Femsehempfängem, die Mikroprozessoren haben, ist sehr leicht - einfach als Software für diese Mikroprozessoren. Die Zwischenspeicherung kann in einem Zwischenspeicher erfolgen. Auch können die Abstimmdaten aus dem Speicher geholt werden.

Bei einer anderen Schaltungsausführung arbeitet das Verfahren unmittelbar im Zusammenwirken mit einem Mikroprozessor und dem Hauptspeicher in vergleichbarer Weise, wobei eine Zwischenspeicherung der aufgerufenen Abstimmdaten in einem gesonderten Zwischenspeicher nicht erforderlich ist, sondern durch Markierung stets auf den markierten Speicherplatz mit den abstimmbaren Daten zurückgeschaltet wird, der vor dem Zappen über den vorausbestimmten Zeitabschnitt hinaus die Abstimmdaten für die Abstimmung des bevorzugt von dem Zuschauer zur Betrachtung vorgesehenen Kanals ausgegeben hat, so dass auch hier in einfacher Weise ohne Mehraufwand und zusätzliche Redundanzen stets nach dem Zappen auf den ausgewählten Kanal zurückgeschaltet werden kann, dessen Programmbeitrag vom Zuschauer gemäß seiner Entscheidung fortgesetzt empfangen werden soll.

## Patentansprüche

1. Verfahren zur Steuerung eines Fernsehempfängers mit einem Tuner, der durch Eingabe von Abstimmkanälen oder Frequenzen mittels Bedienelementen auf bestimmte Abstimmkanäle abstimmbar ist oder durch Eingabe von den Abstimmkanälen zugeordneten Programmplatznummem, die mit Hilfe von Tasten einer Zehnertastatur oder Fortschalttasten einer Ortsbedienung am Fernsehgerät oder eines Fernbedienungsgebers aufrufbar sind, wobei die den Kanälen zugeordneten Abstimmgrößen dem Tuner bei Betätigung der Bedienelemente zugeführt werden und den Fernsehempfänger auf den neuen Sender abstimmen, mit folgenden Merkmalen:
a) Aufrufen der Abstimmdaten eines zu empfangenden Senders aus einem Hauptspeicher, in welchem die Abstimmdaten einer Vielzahl von Sendern abgespeichert sind, und Ablegen der Abstimmdaten in einem Zwischenspeicher;
b) Zuordnen des Speicherplatzes des Zwischenspeichers zu einem bestimmten Bedienelement oder einer virtuellen Nummer, die bei Abstimmung des Tuners des Fernsehgerätes auf den betreffenden Kanal aufrufbar ist;
c) Aktivieren einer Zeitmessschaltung zur Feststellung der Zeit der Abstimmung auf einen bestimmten Sender während des Betrachtens eines Sendebeitrages durch den Zuschauer;
d) Festhalten der gespeicherten Abstimmdaten mit Ablauf eines bestimmten Betrachtungszeitabschnittes;
e) nach dem Wechseln der Abstimmung des Tuners auf einen anderen Kanal zusätzliches Speichern der Abstimmdaten des neuen Kanals in dem Zwischenspeicher;
f) Aktivieren der Zeitmessschaltung zur Feststellung der Zeit der Abstimmung auf den bestimmten neuen Kanal während des Betrachtens des hierüber empfangenen Sendebeitrages durch den Zuschauer;
g) bei Überschreiten eines definierten Betrachtungs-Zeitabschnittes, Ersetzen bzw. Überschreiben der vorherigen Abstimmdaten im Zwischenspeicher durch die neuen Abstimmdaten im Zwischenspeicher;
h) im Falle des Nichterreichens vorbestimmter Werte des Betrachtungs-Zeitabschnittes durch Abschalten des Gerätes oder durch Umschalten auf einen anderen Kanal Löschen des zweiten Eintrags im Zwischenspeicher und Zwischenspeichem der neuen Abstimmdaten des neu angewählten Kanals.

2. Verfahren zur Steuerung eines Fernsehempfängers, der durch Eingabe von Abstimmkanälen oder Frequenzen auf bestimmte Abstimmkanäle abstimmbar ist oder durch Betätigen von den Abstimmkanälen zugeordneten Programmplatznummem, die mit Hilfe einer Zehnertastatur an einer Ortsbedienung am Fernsehgerät oder an einem Fembedienungsgeber aufrufbar sind, wobei die den Kanälen zugeordneten Abstimmgrößen dem Tuner des Fernsehempfängers bei Betätigung der Betätigungselemente zugeführt werden und der Fernsehempfänger auf den neuen Sender abstimmt, mit folgenden Merkmalen:
a) Aufrufen der Abstimmdaten eines zu empfangenden Senders aus einem Speicher durch Betätigung der Betätigungselemente und Markieren des Speicherplatzes bzw. der Adresse, unter der die Abstimmdaten im Speicher abgelegt sind;
b) Zuordnen des markierten Speicherplatzes bzw. der Adresse zu einem bestimmten Bedienelement oder Zuordnen zu einer virtuellen Nummer, die bei Abstimmung des Tuners des Fernsehgerätes auf den betreffenden Kanal aufrufbar ist;
c) Aktivieren einer Zeitmessschaltung zur Feststellung der Zeit der Abstimmung eines Senders während des Betrachtens eines Sendebeitrages durch den Zuschauer;
d) Aufrechterhaltung der Markierung des Speicherplatzes bzw. der Adresse nach Ablauf eines bestimmten Betrachtungszeitabschnittes;
e) Wechseln von einem Speicherplatz oder einer Adresse auf einen anderen Speicherplatz bzw. Adresse zum Abstimmen des Tuners auf einen anderen Kanal bei Aufruf desselben bzw. derselben durch Bedienelemente zum Zwecke des Auslesens der Abstimmdaten für die Abstimmung und Markieren des neuen ausgewählten Speicherplatzes bzw. der Adresse;
f) Aktivieren der Zeitmessschaltung zur Feststellung der Zeit der Abstimmung auf den bestimmten neuen Kanal während des Betrachtens des hierüber empfangenen Sendebeitrags durch den Zuschauer;
g) bei Überschreiten eines definierten Zeitabschnittes, Aufrechterhaltung der Markierung des neu markierten Speicherplatzes bzw. der neu markierten Adresse und Löschen der zuvor erfolgten Markierung und Ersetzen der bisherigen Zuordnung des Speicherplatzes oder der Adresse zu dem bestimmten Bedienelement oder der virtuellen Nummer;
h) im Falle des Nlchterreichens der Zeitabschnittes bei Abschalten des Gerätes oder durch Umschalten auf einen anderen Kanal Löschen der Markierung und Aufrechterhaltung der zuvor erfolgten Markierung desjenigen Speicherplatzes oder der Adresse, mit dessen Abstimmdaten zuletzt der Tuner des Empfängers über die Dauer des Zeitabschnittes abgestimmt war, und Bestätigung der Zuordnung dieses Speicherplatzes oder der Adresse zu dem bestimmten Bedienelement oder der virtuellen Nummer.

3. Verfahren nach Anspruch 1 oder 2, **dadurch gekennzeichnet, dass** mit Abstimmung auf einen Kanal die Abstimmdaten des betreffenden Kanals oder der Speicherplatz oder die Adresse einer virtuellen Nummer für das Aufrufen des Kanals zugeordnet werden und dass unter Aufruf der virtuellen Nummer dasjenige Programm wieder aufgerufen wird, das als jenes Programm mit einem Zeitabschnitt länger als der bestimmte Zeitabschnitt gespeichert oder als solches markiert ist.

4. Verfahren nach Anspruch 1, 2 oder 3, **dadurch gekennzeichnet, dass** die virtuelle Nummer die Nummer 0 oder 00 ist.

5. Fernsehempfänger zur Durchführung des Verfahrens nach Anspruch 1 in Verbindung mit Anspruch 3, **gekennzeichnet durch**
- einen Block zur Eingabe der Nummer des Kanals zum Empfang (ENK),
- einen Block für die Speicherung virtueller Nummern der Kanäle (BVN) in einem Zwischenspeicher, in welchem der virtuellen Nummer zugeordnet die Abstimmdaten des Empfangskanals abgespeichert sind, der über einen längeren definierten Zeitabschnitt hinaus empfangen wurde,
- eine Zeitschaltung, die die Betrachtungszeit eines Programms, das unter einem Empfangskanal empfangen wird, erfasst und mit Ablauf eines Zeitfensters eine Steuereinrichtung zum vorübergehenden Speichern weiterer Abstimmdaten eines Kanals bei Abstimmung auf einen neuen Kanal in dem Zwischenspeicher aktiviert,
- eine Löschschaltung zum Löschen der zusätzlich gespeicherten Daten im Zwischenspeicher im Falle, dass über das bestimmte Zeitfenster hinausgehend der neue Kanal nicht betrachtet bzw. auf einen anderen Kanal umgeschaltet wird, und
- eine Übemahmeschaltung, die die neuen Abstimmdaten anstelle der alten Kanaldaten im Falle, dass das neue Programm über den definierten Zeitraum hinaus abgestimmt bleibt, setzt.

6. Fernsehempfänger nach Anspruch 5, **dadurch gekennzeichnet, dass** eine Steuerschaltung vorgesehen ist, die den Speicherplatz im Zwischenspeicher, der über einen längeren Zeitabschnitt zur Abstimmung herangezogen wird, einer bestimmten Taste der Orts- oder Fernbedienung oder einer virtuellen Nummer zuordnet.

7. Fernsehempfänger zur Durchführung des Verfahrens nach Anspruch 2 in Verbindung mit Anspruch 3, **gekennzeichnet durch** eine Steuerschaltung, die bei Aufrufen der Abstimmdaten für einen bestimmten Abstimmkanal **durch** Betätigen von Bedienelementen aus einem Speicher den abgerufenen Speicherplatz markiert und diese dem bestimmten Bedienelement oder einer virtuellen Nummer zuordnet, bei dessen Betätigung bzw. Eingabe der Tuner auf den bestimmten Kanal abstimmbar ist, dass eine Zeitmessschaltung vorgesehen ist, die die Zeit der Abstimmung auf den gegenwärtigen Kanal misst und mit einem definierten Zeitabschnitt vergleicht, wobei bei Überschreiten des Zeitfensters die Markierung festgehalten wird, bei Abstimmung auf einen neuen Kanal innerhalb des Zeitfensters der Speicherplatz bzw. die virtuelle Nummer zusätzlich oder alternativ markiert wird, diese aber noch nicht dem bestimmten Bedienelement oder der bestimmten Nummer zugeordnet wird, im Falle der Abstimmung des neuen Kanals über den Zeitabschnitt hinaus die zusätzliche oder alternative Markierung als alleinige beibehalten und dem bestimmten Bedienelement oder der virtuellen Nummer zugeordnet wird.

8. Fernsehempfänger nach einem der Ansprüche 5 bis 7, **dadurch gekennzeichnet, dass** die Steuerschaltung durch einen Mikroprozessor realisiert ist, der sowohl die Zuordnung eines bestimmten Bedienelementes (Taste) oder einer virtuellen Nummer entsprechend der angegeben Logik vornimmt als auch die Speicherverwaltung durchführt.

9. Fernsehempfänger nach Anspruch 5, 6, 7 oder 8, einschließend einen Empfänger (1) für Fernsehsignale, **gekennzeichnet durch** einen Block zur Eingabe der Nummer des Kanals zum Empfangen (BENK), einen Block für die virtuellen Nummern der Kanäle (BVN), wobei der Ausgang des BENK mit dem Eingang des BVN und der Ausgang des BVN mit dem Eingang des Empfängers (1) verbunden sind, einen zusätzlichen Block für die Feststellung des Prioritätskanals (BPK), wobei der erste Eingang dieses Blocks (BPK) mit einem Ausgang des Empfängers (1) und der zweite Eingang dieses Blocks (BPK) mit dem Ausgang eines Timers (B-T) und der Ausgang des Blocks für die Feststellung des Prioritätskanals (BPK) mit einem Eingang des Empfängers (1) verbunden sind.

## Claims

1. Method of controlling a television receiver with a tuner, which is tunable to specific tuning channels by input of tuning channels or frequencies by means of control elements or by input of program place numbers which are associated with the tuning channels and which can be called up with the help of buttons of a decade keyboard or stepping buttons of a local control at the television apparatus or of a remote control transmitter, wherein the tuning magnitudes associated with the channels are fed to the tuner on actuation of the control elements and the television receiver tuned to the new transmitter, with the following features:
a) calling up the tuning data of a transmitter, which is to be received, from a main store in which the tuning data of a plurality of transmitters are stored and filing the tuning data in an intermediate store;
b) association of the storage place of the intermediate store with a specific control element or a virtual number, which can be called up on tuning of the tuner of the television apparatus to the channel concerned;
c) activation of a time measuring circuit for establishing the time of the tuning to a specific transmitter during consideration of a transmission contribution by the viewer;
d) fixing the stored tuning data with expiry of a specific consideration time period;
e) after change of the tuning of the tuner to another channel, additional storage of the tuning data of the new channel in the intermediate store;
f) activation of the time measuring circuit for establishing the time of the tuning to the specific new channel during consideration of the transmission contribution, which is received about this, by the viewer;
g) on exceeding of a defined consideration time period, replacing or writing over the previous tuning data in the intermediate store by the new tuning data in the intermediate store; and
h) in the case of non-attainment of predetermined values of the consideration time period by switching off the apparatus or by switching over to another channel, cancellation of the second entry in the intermediate store and intermediate storage of the new tuning data of the newly selected channel.

2. Method of controlling a television receiver, which is tunable to specific tuning channels by input of tuning channels or frequencies or by actuation of program place numbers which are associated with the tuning channels and which can be called up with the help of a decade keyboard at a local control at the television apparatus or at a remote control transmitter, wherein the tuning magnitudes associated with the channels are fed to the tuner of the television receiver on actuation of the actuating elements and the television receiver tuned to the new transmitter, with the following features:
a) calling up the tuning data of a transmitter, which is to be received, from a store by actuation of the actuating elements and flagging of the storage place or the address under which the tuning data are filed in the store;
b) association of the flagged storage place or the address with a specific control element or association with a virtual number which can be called up on tuning of the tuner of the television apparatus to the channel concerned;
c) activation of a time measuring circuit for establishing the time of the tuning of a transmitter during consideration of a transmission contribution by the viewer;
d) maintenance of the flagging of the storage place or the address after expiry of a specific consideration time period;
e) change of a store place or an address to another storage place or address for tuning of the tuner to another channel on calling up of the same by control elements for the purpose of reading out the tuning data for the tuning and flagging of the newly selected storage place or the address;
f) activation of the time measuring circuit for establishing the time of the tuning to the specific new channel during the consideration of the transmission contribution, which is received about this, by the viewer;
g) on exceeding of a defined time period, maintenance of the flagging of the newly marked storage place or the newly marked address and cancellation of the previously effected flagging and replacement of the former association of the storage place or address with the specific control element or the virtual number; and
h) in the case of non-attainment of the time period on switching-off of the apparatus or by switching over to another channel, cancellation of flagging and maintenance of the previously effected flagging of that storage place or address, by the tuning data of which the tuner of the receiver was last tuned over the duration of the time period, and acknowledgement of the association of this storage place or the address to the specific control element or the virtual number.

3. Method according to claim 1 or 2, **characterised in that** with tuning to a new channel the tuning data of the channel concerned or the storage place or the address is or are associated with a virtual number for the calling up of the channel and that on call-up of the virtual number that program is called up again which is stored as the program with a time period longer than the specific time period or is flagged as such.

4. Method according to claim 1, 2 or 3, **characterised in that** the virtual number is the number 0 or 00.

5. Television receiver for carrying out the method according to claim 1 in conjunction with claim 3, **characterised by**
- a block for input of the number of the channel for the reception (ENK),
- a block for the storage of virtual numbers of the channels (BVN) in an intermediate store, in which there are stored the virtual numbers associated with the tuning data of the receiving channels which were received over a longer defined time period,
- a time circuit which detects the consideration time of a program, which is received under a receiving channel, and on expiry of a time window activates a control device for temporary storage in the intermediate store of further tuning data of a channel when tuning to a new channel takes place,
- a cancellation circuit for cancellation of the additionally stored data in the intermediate store in the case that over the specific time window the new channel is not considered or is switched over to another channel, and
- a take-over circuit which sets the new tuning data instead of the old channel data in the case that the new program remains tuned over the defined time period.

6. Television receiver according to claim 5, **characterised in that** a control circuit is provided which associates the storage place in the intermediate store, which is utilised over a longer time period for tuning, with a specific button of the local or remote control or with a virtual number.

7. Television receiver for performing the method according to claim 2 in conjunction with claim 3, **characterised by** a control circuit, which on calling-up of the tuning data for a specific tuning channel by actuation of control elements of a store flags the called-up storage place and associates this with the specific control element or with a virtual number, on the actuation or input of which the tuner is tunable to the specific channel, that a time measuring circuit is provided which measures the time of the tuning to the current channel and compares it with a defined time period, wherein on exceeding of the time window the flagging is fixed, on tuning to a new channel within the time window the storage place or the virtual number is additionally or alternatively flagged, but this is still not associated with the specific control element or the specific number, and in the case of tuning of the new channel over the time period the additional or alternative flagging is maintained as the sole one and associated with the specific control element or the virtual number.

8. Television receiver according to one of claims 5 to 7, **characterised in that** the control circuit is realised by a microprocessor, which not only undertakes the association of a specific control element (button) or a virtual number in correspondence with the indicated logic, but also carries out the storage management.

9. Television receiver according to claim 5, 6, 7 or 8, including a receiver (1) for television signals, **characterised by** a block for input of the number of the channel for reception (BENK), a block for the virtual numbers of the channels (BVN), wherein the output of the BENK is connected with the input of the BVN and the output of the BVN is connected with the input of the receiver (1), and an additional block for establishing the priority channel (BPK), wherein the first input of this block (BPK) is connected with an output of the receiver (1) and the second input of this block (BPK) is connected with the output of a timer (B-T) and the output of the block for establishing the priority channel (BPK) is connected with an input of the receiver (1).

## Revendications

1. Procédé de commande d'un récepteur de télévision pourvu d'un tuner pouvant être accordé sur des canaux de syntonisation donnés par l'entrée des canaux de syntonisation ou des fréquences au moyen d'éléments de commande ou par la saisie de numéros d'emplacement de programme affectés aux canaux de syntonisation et pouvant être appelés à l'aide des touches d'un pavé numérique ou de touches d'avance d'une commande locale sur le téléviseur ou d'une télécommande, dans lequel les grandeurs de syntonisation associées aux canaux sont transmises au tuner lors de l'actionnement des éléments de commande et accordent le récepteur de télévision sur le nouvel émetteur, lequel procédé présente les caractéristiques suivantes:
a) appel des données de syntonisation d'un émetteur à capter à partir d'une mémoire principale dans laquelle sont enregistrées les données de syntonisation d'une pluralité d'émetteurs, et inscription des données de syntonisation dans une mémoire tampon ;
b) attribution de l'emplacement en mémoire de la mémoire tampon à un élément de commande donné ou à un nombre virtuel pouvant être appelé lors de l'accord du tuner du téléviseur sur le canal concerné ;
c) activation d'un circuit de mesure du temps pour déterminer le temps de syntonisation sur un émetteur donné pendant que le spectateur regarde une émission ;
d) enregistrement des données de syntonisation stockées en mémoire à la fin d'un temps de visionnage déterminé ;
e) après accord du tuner sur un autre canal, enregistrement complémentaire des données de syntonisation du nouveau canal dans la mémoire tampon ;
f) activation du circuit de mesure du temps pour déterminer le temps de syntonisation sur le nouveau canal donné pendant que le spectateur regarde une émission captée sur celui-ci ;
g) en cas de dépassement d'une durée de visionnage définie, remplacement ou écrasement des données de syntonisation précédentes par les nouvelles données de syntonisation dans la mémoire tampon ;
h) si des valeurs prédéterminées de la durée de visionnage ne sont pas atteintes en raison de l'arrêt de l'appareil ou du passage à un autre canal, effacement de la deuxième entrée dans la mémoire tampon et enregistrement des données de syntonisation du nouveau canal sélectionné dans la mémoire tampon.

2. Procédé de commande d'un récepteur de télévision pouvant être accordé sur des canaux de syntonisation donnés par l'entrée des canaux de syntonisation ou des fréquences ou par la saisie de numéros d'emplacement de programme affectés aux canaux de syntonisation et pouvant être appelés à l'aide d'un pavé numérique d'une commande locale sur le téléviseur ou d'une télécommande, dans lequel les grandeurs de syntonisation associées aux canaux sont transmises au tuner du récepteur de télévision lors de l'actionnement des éléments de commande et accordent le récepteur de télévision sur le nouvel émetteur, lequel procédé présente les caractéristiques suivantes :
a) appel des données de syntonisation d'un émetteur à capter à partir d'une mémoire par actionnement des éléments de commande et marquage de l'emplacement en mémoire ou de l'adresse à laquelle les données de syntonisation sont stockées dans la mémoire ;
b) attribution de l'emplacement en mémoire ou de l'adresse marqués à un élément de commande donné ou attribution à un nombre virtuel qui peut être appelé lors de la syntonisation du tuner du téléviseur sur le canal concerné ;
c) activation d'un circuit de mesure du temps pour déterminer le temps de syntonisation sur un émetteur donné pendant que le spectateur regarde une émission ;
d) maintien du marquage de l'emplacement en mémoire ou de l'adresse après écoulement d'une durée de visionnage déterminée ;
e) changement d'un emplacement en mémoire ou d'une adresse à un autre emplacement en mémoire ou une autre adresse pour accorder le tuner sur un autre canal lors de l'appel de celui-ci ou de celle-ci par des éléments de commande aux fins de lecture des données de syntonisation pour l'accord et le marquage du nouvel emplacement en mémoire ou de la nouvelle adresse sélectionnée;
f) activation du circuit de mesure du temps pour déterminer le temps de syntonisation sur le nouveau canal donné pendant que le spectateur regarde une émission captée sur celui-ci ;
g) en cas de dépassement d'une durée définie, maintien du marquage du nouvel emplacement en mémoire ou de la nouvelle adresse marqués et effacement du marquage précédent et remplacement de l'affectation de l'emplacement en mémoire ou de l'adresse à l'élément de commande déterminé ou au nombre virtuel ;
h) si la durée n'est pas atteinte en raison de l'arrêt de l'appareil ou du passage à un autre canal, effacement du marquage et maintien du marquage de l'emplacement en mémoire ou de l'adresse dont les données de syntonisation ont été les dernières utilisées pour accorder le tuner du récepteur pendant la durée donnée, et confirmation de l'affectation de cet emplacement en mémoire ou de l'adresse à l'élément de commande déterminé ou au nombre virtuel.

3. Procédé selon la revendication 1 ou 2, **caractérisé en ce que** lors de la syntonisation sur un canal, les données de syntonisation du canal en question ou l'emplacement en mémoire ou l'adresse sont affectés à un nombre virtuel pour l'appel du canal et **en ce que** lorsque le nombre virtuel est appelé, le programme appelé est le dernier qui a été enregistré ou marqué comme étant celui dont la durée a dépassé la durée déterminée.

4. Procédé selon la revendication 1, 2 ou 3, **caractérisé en ce que** le nombre virtuel est 0 ou 00.

5. Récepteur de télévision pour la mise en oeuvre du procédé selon la revendication 1 en relation avec la revendication 3, **caractérisé en ce qu'**il comporte
- un module pour la saisie du numéro du canal de réception (ENK),
- un module pour l'enregistrement de nombres virtuels des canaux (BVN) dans une mémoire tampon dans laquelle les données de syntonisation du canal de réception capté pendant plus longtemps qu'une durée prolongée définie sont enregistrées avec le nombre virtuel,
- un circuit de comptage du temps qui mesure le temps de visionnage d'un programme capté sur un canal de réception et, lorsqu'une fenêtre de temps est écoulée, active un dispositif de commande pour l'enregistrement temporaire dans la mémoire tampon d'autres données de syntonisation d'un canal lors de la syntonisation sur un nouveau canal,
- un circuit d'effacement destiné à effacer les données supplémentaires enregistrées dans la mémoire tampon lorsque le nouveau canal n'est pas regardé pendant toute la fenêtre de temps ou qu'un autre canal est sélectionné pendant celle-ci, et
- un circuit de reprise qui définit les nouvelles données de syntonisation en remplacement des anciennes données de canal si le nouveau programme reste syntonisé au-delà de la durée définie.

6. Récepteur de télévision selon la revendication 5, **caractérisé en ce qu'**il est prévu un circuit de commande qui associe l'emplacement dans la mémoire tampon utilisé pour la syntonisation sur une durée prolongée à une touche donnée de la commande locale ou de la télécommande ou à un nombre virtuel.

7. Récepteur de télévision pour la mise en oeuvre du procédé selon la revendication 2, en relation avec la revendication 3, **caractérisé en ce qu'**il comporte un circuit de commande qui marque l'emplacement en mémoire appelé lorsque les données de syntonisation d'un canal de syntonisation donné sont appelés par actionnement des éléments de commande et associe ceux-ci à l'élément de commande donné ou à un nombre virtuel, dont l'actionnement ou la saisie permet d'accorder le tuner sur un canal donné, **en ce qu'**il est prévu un circuit de mesure du temps qui mesure le temps de syntonisation sur le canal en cours et le compare avec une durée définie, le marquage étant conservé en cas de dépassement de la fenêtre de temps, l'emplacement en mémoire ou le nombre virtuel étant marqué en outre ou en remplacement en cas de passage sur un nouveau canal pendant la fenêtre de temps, mais sans être associé encore à l'élément de commande ou au nombre donné, le marquage supplémentaire ou de substitution étant seul conservé et attribué à l'élément de commande ou au nombre virtuel si la syntonisation sur le nouveau canal dépasse la période de temps.

8. Récepteur de télévision selon l'une ou l'ensemble des revendications 5 à 7, **caractérisé en ce que** le circuit de commande est formé par un microprocesseur qui réalise aussi bien l'affectation d'un élément de commande donné (touche) ou d'un nombre virtuel selon la logique indiquée que la gestion de la mémoire.

9. Récepteur de télévision selon la revendication 5, 6, 7 ou 8, comprenant un récepteur (1) pour des signaux de télévision, **caractérisé en ce qu'**il comprend un module pour la saisie du numéro du canal à recevoir (BENK), un module pour les nombres virtuels des canaux (BVN), la sortie du BENK étant reliée à l'entrée du BVN et la sortie du BVN avec l'entrée du récepteur (1), un module supplémentaire pour déterminer le canal prioritaire (BPK), la première entrée de ce module (BPK) étant reliée à une sortie du récepteur (1) et la deuxième entrée de ce module (BPK) à la sortie d'une minuterie (B-T) et la sortie du module pour déterminer le canal prioritaire (BPK) étant reliée à l'entrée du récepteur (1).
